Europäisches Patentamt

European Patent Office

Office européen des brevets

(11) Publication number: **0 660 157 A1**

## EUROPEAN PATENT APPLICATION

(21) Application number: 93203583.5

(22) Date of filing: 20.12.93

(51) Int. Cl.⁶: **G02B 27/10**, G02B 19/00,
G02B 6/42, G02B 27/12,
G02B 27/00

(43) Date of publication of application:
28.06.95 Bulletin 95/26

(84) Designated Contracting States:
**BE DE FR GB NL**

(71) Applicant: **AGFA-GEVAERT naamloze
vennootschap
Septestraat 27
B-2640 Mortsel (BE)**

(72) Inventor: **Struye, Luc c/o Agfa-Gevaert
N.V.,DIE3800
Septestraat 27
B-2640 Mortsel (BE)**
Inventor: **Leblans, Paul c/o Agfa-Gevaert
N.V.,DIE 3800
Septestraat 27
B-2640 Mortsel (BE)**

(54) Device for combining laser beams in a common light spot.

(57) A device by means of which laser beams of spatially differently located laser beam sources are focused to form one common light spot, wherein said device comprises :

(i) a plurality of laser beam sources (1, 2 and 3) being spatially arranged in such a way that they have inherently or through the combination of each of them with an own optical means, e.g. a lens (4, 5 and 6), the property to produce convergent or divergent light rays having a common focal point (Fc) for all said sources, and
(ii) a common optical means (7) for receiving said convergent or divergent light rays of all said laser beam sources and focusing them into one common focal light spot (F).

FIG. 1

1. Field of the Invention

The present invention relates to a device by means of which a plurality of laser beams of spatially differently located laser beam sources are focused to form one single light spot.

2. Background of the Invention

Exposure sources based on the emission of laser beams have been used widely in scanning recording apparatus and scanning read-out apparatus. In some apparatus operating with panchromatic light-sensitive materials it may be desirable to combine laser beams of different colour in one spot. In other apparatus it may be desirable to combine different low power beams to reach the required exposure energy, for direct-read-after-write (DRAW) recording based on e.g. heat mode ablation of thin metal or dye films, heat mode changes of magnetizability, thermal chemical colour change or thermally induced dye diffusion transfer from a donor to a receptor material (ref. WO 91 010 310 relating to a thermal laser printer operating with a relatively high-powered single transverse mode coherent laser).

Another important application of laser beam scanning is in the reading out of the energy stored in photostimulable storage phosphors as described e.g. in published European patent application (EP-A) 0 559 258. In this document the reading out of the halosilicate phosphor defined therein proceeds with infrared light in the wavelength range of 720 to 1550 nm. Appropriate lasers for producing light in said wavelength range are semiconductor lasers which have various advantages over gas lasers in that they are small in size, cheap and consume little power. The intensity of the laser beam of a semiconductor laser, also called diode laser, can be modulated directly by changing its drive current. Unfortunately the light output power of commercially available semiconductor lasers is not very high, normally smaller than 150 mW. For example, 150 / 100 / 50 mW cw single mode GaAlAs laser diodes are commercially available as can be learned from the 1993 Laser Diode Product Catalog of SDL Spectra Diode Labs - Auriema Nederland bv. Beatrix de Rijksweg 8 - 5657 EG Eindhoven, The Netherlands).

For many recording and read out applications a laser output power of 150 mW is insufficient.

An important characteristic of lasers is that their emission is concentrated in a narrow beam. However, in semiconductor lasers having a relatively thin light emitting junction zone the light spreads by diffraction effects in the relatively small output opening of said type of lasers and angles of divergence up to 20 ° of thus produced laser light are not unusual.

Examples of suitable very compact semiconductor lasers are GaAlAs, InGaAs, GaAlAs/GaAs, InGaAsP, GaLnAsP and InGaAlP semiconductor lasers (ref. e.g. Laser & Optronics, December 25, 1991, p. 7.

According to US-P 5,216,544 a beam-combining laser beam source device comprises :
  i) an airtight housing comprising an inner suface,
  ii) a laser beam source unit which is housed in said housing and which comprises :
    a) a plurality of laser beam sources,
    b) an optical collimator system respectively positioned in the optical path of each laser beam in order to collimate the laser beams (i.e. make the beams parallel),
    c) optical path adjusting elements each respectively positioned in the optical path of the collimated laser beams in order to radiate the laser beams along optical paths which are parallel and spaced a predetermined distance apart from one another, and
    d) a support means which supports said laser beam sources, said optical collimator system, and said optical path adjusting elements, said support means comprising an outer surface,
wherein the emissivity of the outer surface of said support means is not larger than 0.5., and/or the emissivity of the inner surface of said housing is not larger than 0.5.

The housing is provided with a temperature sensor, which detects the temperature in the housing, and is further provided with temperature adjusting elements which heat or chill the housing on the basis of control of the temperature sensor so that the temperature in the housing is kept constant.

Said beam-combining laser beam source device needs accurate temperature control of the different holding means of its optical components which may not be deformed for otherwise the accuracy of the positions of the collimator optical systems and the optical path adjusting elements would become deteriorated. A temperature difference of 1 ° C has been considered to be prohibitive for correctly combining the laser beams (collimated beams) in optical paths parallel and close to each other.

The collimated single beam of the different laser sources can be easily converged to a single spot at a desired position by a converging lens.

It would be a real advantage if that critical temperature control could be omitted and a plurality of laser beams of different laser beam sources could be converged into one focal point without considerable loss of power by misalignment due e.g. to deformation of mirrors applied in the reflection of the different laser beams to form one single light beam.

## 3. Objects and Summary of the Invention

It is an object of the present invention to provide a device by means of which a plurality of laser beams of spatially differently located laser beam sources are focused to form one common light spot including almost all the power of the combined beams.

It is a further object of the present invention to provide such kind of a said device that is less sensitive to temperature fluctuations causing defocusing of the different laser beams than the above mentioned prior art device operating with parallel light beams.

It is another object to provide a scanner comprising such kind of a device.

Further objects and advantages of the present invention will become clear from the further description and drawings.

In accordance with the present invention a device is provided by means of which laser beams of spatially differently located laser beam sources are focused to form one common light spot, wherein said device comprises :

(i) a plurality of laser beam sources being spatially arranged in such a way that they have inherently or through the combination of each of them with an own optical means, e.g. a lens, the property to produce convergent or divergent light rays having a common focal point (Fc) for all said sources, and

(ii) a common optical means for receiving said convergent or divergent light rays of all said laser beam sources and focusing them into one common light spot (F).

The present invention includes the embodiment wherein in the above described "invention" device said common optical means (ii) is omitted only in case said laser beam sources as described under (i) produce convergent light rays focused into said common focal point (Fc).

In a scanner according to the present invention said device may form part of a known scanning mechanism e.g. as described in US-P 4,800,276, WO 91 010 310 and published European patent application (EP-A) 547 170 (US Ser. Nr. 578162).

According to said last mentioned published EP-A the source of radiation is a diode laser which is adapted to provide a focused beam onto a rotable polygon mirror wherefrom the beam is reflected through a f-$\theta$ lens and then goes to a cylindrical mirror which directs the beam scanningwise (to and fro) onto a receiving medium which is given unidirectional motion at constant speed.

## 4. Brief Description of the Drawings

Fig. 1 represents a schematic drawing of an optical device according to the present invention in which convergent laser light rays of different semiconductor lasers are focused by a single double-convex lens.

Fig. 2 represents a schematic drawing of an optical device according to the present invention in which divergent laser light rays of different semiconductor lasers are focused by a single double-convex lens.

## 5. Detailed Description of the Invention

The optical means (ii) for receiving said converging or diverging light rays and focusing them into one common light spot may be a single lens or lens system having light converging properties or may be a concave mirror providing the same focusing result.

The present invention will hereinafter be described in further detail with reference to the accompanying drawings.

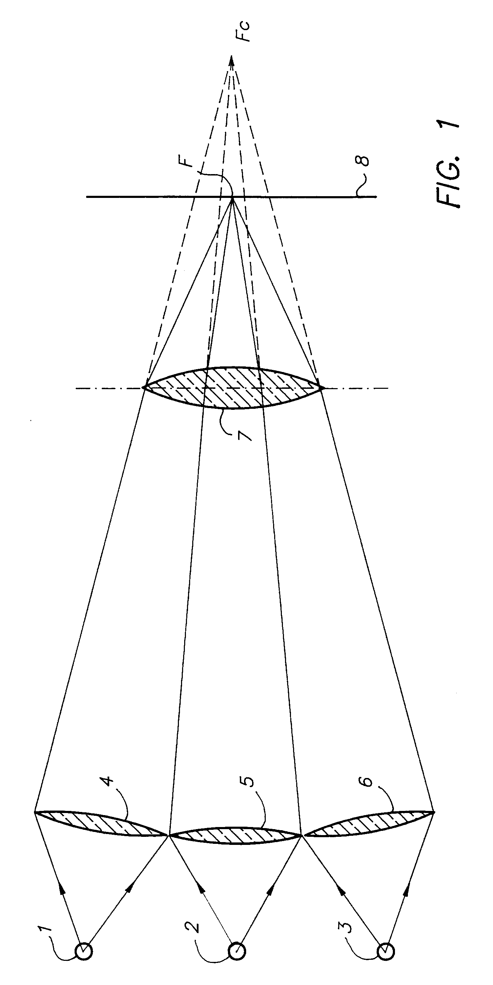

As illustrated in Fig. 1, representing a preferred embodiment of the present invention, three infrared light emitting semiconductor lasers 1, 2 and 3 are adapted to emit their light rays (see solid lines at the output of the lasers) in an angle between 75° and 90°. The initial widening of the light output angle of the individual lasers gives them more space for accomodation in a housing having a common (single) support means for the different optical elements. Each of the emitted light rays is incident on a lens (4, 5 and 6) having a light converging character, e.g. as shown in the drawing a double-convex converging lens. In an alternative embodiment plano-convex lenses are used.

The light rays passing the light converging lenses (4, 5 and 6) coincide as shown by the dashed lines into one common focal point Fc, but the optical path is too long for producing a compact apparatus for scanning purposes. Therefore a further single light converging lens 7 is present in the optical path of the converging light rays stemming from the lasers 1, 2 and 3. Lens 7 focuses the different beams into a common light spot (focal spot F) on the element 8 to be exposed, here a photostimulable panel that is given X-Y scanning motion.

According to the embodiment illustrated in Fig. 1 no mirrors are used to combine the several laser light rays beams into one single light beam as is the case in the above mentioned US-P 5,216,544 according to which mirrors combine different parallel light beams into one. Mirrors have the inherent property that their angle of reflection is very sensitive to temperature fluctuations in that small changes in the orientation or deformation of the mirror-surface already cause serious defects in light collimation as set forth in said US-P.

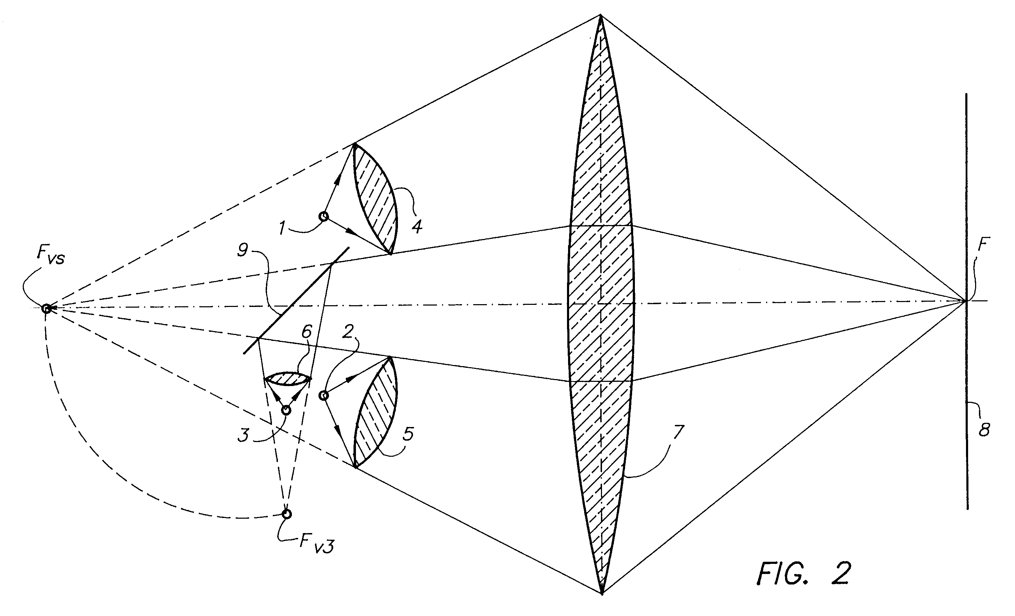

Fig. 2 represents an embodiment of the present invention different from the embodiment of Fig. 1 in that diverging light rays are incident onto said single light converging lens 7.

One of the lasers (laser 3) is associated with a mirror 9 for projecting the divergent light rays of said laser 3 towards the light converging lens 7.

The convergent dashed lines in the drawing coincide into virtual focusing points $F_{v3}$ and $F_{vs}$ respectively. The common (real) focal point of the convergent light rays (indicated by solid lines) leaving lens 7 is designated by F.

Once the light rays of the different lasers are oriented to come together into one common focal spot F a collimated light beam (i.e. beam of parallel light rays) can be obtained therefrom by optical means known in the art, e.g. as illustrated in Fig. 39-21 (a) and Fig. 40-5 (a) and 40-8 (b) of "University Physics" by Francis Weston Sears and Mark W. Zemansky, fourth edition (1972), Addison-Wesley Publishing Company Reading, Massachusetts U.S.A.

So, according to an embodiment a device according to the present invention contains optical means for producing a collimated light beam (i.e. beam of parallel light rays) from the light rays of the different lasers oriented to come together into said common focal light spot F.

According to first mode said device for producing said collimated light beam from different laser light sources contains a plano-convex lens following said focal light spot F, said lens having for producing said collimated light beam a properly curved surface directed towards said spot F and a proper index of refraction (n') with respect to the refractive index (n) of air [see the above mentioned Fig. 39-21 (a)].

According to a second mode said device for producing said collimated light beam contains at least one rod lens following said focal light spot F into which rod lens light from said focal light spot F is introduced, said rod lens having a graded, refractive index (GRIN) profile similar to a graded index fiber but having a larger diameter.

Such rod lenses are commercially available under the name SELFOC which is a tradename of Nippon Sheet Glass Co. The light entering the SELFOC (tradename) lenses leaves said lenses as a collimated light beam, i.e. beam of parallel light rays (ref. "Fiber Optics Handbook" - An Introduction and Reference Guide to Fiber Optic Technology and Measurement Techniques - 3rd ed. by Christian Hentschel - Hewlett-Packard GmbH, Boeblingen Instruments Division Federal Republic of Germany, March 1989, p. 197-198).

In a modified embodiment derived from the preceding one an optical device according to the present invention comprises at least one optical fiber that has a light input opening capable of receiving light stemming from said common focal light spot F and that has a light output opening optically coupled to the above mentioned type of rod lens with graded refractive index (GRIN) profile.

When using optical fibers it is necessary to consider the limitations that are set by the numerical aperture (NA) of the fibers. The numerical aperture defines the angle ($\theta$) of acceptance of input light. The numerical aperture of multimode or single mode fibers is defined as :

$$NA = (n_1{}^2 - n_2{}^2)^{1/2} = \sin \theta$$

wherein $n_1$ and $n_2$ are respectively the refractive indices of the fiber core and the cladding material of the fiber involved (ref. the already mentioned "Fiber Optics Handbook" p. 50-53 and 76-83). Numerical apertures of common optical fibers may be in the range of 0.1 to 0.5, which correspond with total light acceptance angles $2\theta$ of about 12° to 60°. The above defined common light spot may be formed on the light input openings of a bundle of optical fibers each of which for producing collimated light is provided with a SELFOC (tradename) lens.

A collimated laser beam may be used in a scanner operating with an oscillating galvanometer mirror (ref. e.g. US-P 4,800,276 Fig. 7) or rotating polygon mirror as shown e.g. in DE 0 4221067, optionally using a light-beam-converging lens or lens system system between said mirror and the surface to be scanned.

Such scanner may be used for reading out the image information recorded by penetrating radiation in a photostimulable phosphor-containing layer by stimulating the same and collecting the fluorescent light emitted upon photostimulation.

## Claims

1. A device by means of which laser beams of spatially differently located laser beam sources are focused to form one common light spot, wherein said device comprises :

   (i) a plurality of laser beam sources (1, 2 and 3) being spatially arranged in such a way that they have inherently or through the combination of each of them with an own optical means (4, 5 and 6) the property to produce convergent or divergent light rays having a common focal point (Fc) for all said sources, and

   (ii) a common optical means (7) for receiving said convergent or divergent light rays of all said laser beam sources and focusing them into one common focal light spot (F).

2. Device according to claim 1, wherein said optical means mentioned under (i) is a lens.

3. Device according to claim 1 or 2, wherein said optical means mentioned under (ii) is a light converging single lens or lens system or a concave mirror.

4. Device according to any of the preceding claims, wherein said device contains optical means for producing a collimated light beam from the light rays of the different lasers that have been oriented to come together into said common focal light spot F.

5. Device according to claim 4, wherein for producing said collimated light beam said device contains a plano-convex lens following said focal light spot F, said lens having for producing said collimated light beam a properly curved surface directed towards said spot F and a proper index of refraction (n') with respect to the refractive index (n) of air.

6. Device according to claim 4, wherein for producing said collimated light beam said device contains at least one rod lens following said focal light spot F into which rod lens light from said focal light spot F is introduced, said rod lens having a graded, refractive index (GRIN) profile similar to a graded index fiber but having a larger diameter.

7. Device according to claim 6, wherein for producing said collimated light beam said device contains at least one rod lens following said focal light spot F into which rod lens light from said focal light spot is introduced through at least one optical fiber optically connected to said rod lens.

8. Device according to any of the preceding claims, wherein said laser beam sources are semiconductor lasers emitting infrared light in the wavelength range of 720 to 1550 nm.

9. Device according to claim 8, wherein said laser beam sources are selected from the group consisting of a semiconductor GaAlAs, InGaAs, GaAlAs/GaAs, InGaAsP, GaLnAsP and InGaAlP laser.

10. Device according to any of the preceding claims, wherein said device makes part of a scanning mechanism.

11. Device according to claim 1, wherein said common optical means (ii) is omitted only in case said laser beam sources as described under (i) produce convergent light rays focused into said common focal point (Fc).

FIG. 1

FIG. 2

EP 0 660 157 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | OPTICS LETTERS, vol.17, no.14, 15 July 1992, NEW YORK US pages 1000 - 1002 H.R.VERDUN ET AL. 'EFFICIENT TEMoo-MODE OPERATION OF A Nd:YAG LASER END PUMPED BY A THREE-BAR HIGH-POWER DIODE-LASER ARRAY' * page 1001, left column; figure 2 * | 1-11 | G02B27/10 G02B19/00 G02B6/42 G02B27/12 G02B27/00 |
| Y | WO-A-92 02844 (DIOMED) * page 4; figure 3 * | 1-11 | |
| Y | US-A-4 826 269 (W.STREIFER ET AL.) * abstract; figures 1-6 * | 1-11 | |
| Y | FR-A-708 180 (SOCIETE GENERALE D'OPTIQUE) * the whole document * | 1-4,11 | |
| Y | US-A-5 168 401 (J.ENDRIZ) * abstract; figures 1-23 * | 1-4,7 | |
| Y | APPLIED OPTICS, vol.30, no.6, 20 June 1991, NEW YORK US pages 630 - 632 T.Y.FAN 'EFFICIENT COUPLING OF MULTIPLE DIODE LASER ARRAYS TO AN OPTICAL FIBER BY GEOMETRIC MULTIPLEXING' * the whole document * | 1-4 | **TECHNICAL FIELDS SEARCHED** (Int.Cl.6) G02B H01S |
| D,Y | F.W.SEARS ET AL. 'UNIVERSITY PHYSICS' 1972 , ADDISON-WESLEY PUBLISHING COMPANY READING , MASSCHUSETTS U.S.A. * page 571; figures 39-21A * | 5 | |
| Y | PATENT ABSTRACTS OF JAPAN vol. 6, no. 41 (P-106) (919) 13 March 1982 & JP-A-56 158 317 (NIPPON DENSHIN DENWA KOSHA) 7 December  1981 * abstract * | 6,7 | |

-/--

The present search report has been drawn up for all claims

| Place of search | Date of completion of the search | Examiner |
|---|---|---|
| THE HAGUE | 4 May 1994 | Malic, K |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | LASER & OPTRONICS, vol.10, no.12, 25 December 1991 page 26 'SPECTRA DIODE LABS' * the whole document * --- | 8,9 | |
| D,Y | WO-A-92 04652 (EASTMEN KODAK) * abstract; figure 1 * ----- | 10 | |

TECHNICAL FIELDS
SEARCHED       (Int.Cl.6)

The present search report has been drawn up for all claims

| Place of search | Date of completion of the search | Examiner |
|---|---|---|
| THE HAGUE | 4 May 1994 | Malic, K |

EPO FORM 1503 03.82 (P04C01)